# EUROPÄISCHE PATENTSCHRIFT

(11) **EP 2 769 858 B1**
(45) Veröffentlichungstag und Bekanntmachung des Hinweises auf die Patenterteilung: **08.09.2021**
(21) Anmeldenummer: 14000137.1
(22) Anmeldetag: 15.01.2014
(51) Int. Cl.: B60G 5/00, B60G 21/06, B60G 17/033, B60D 1/24

(54) **EINRICHTUNG ZUR STEUERUNG DER DEICHSELLAST BEI MEHRACHSIGEN ANHÄNGERN**
DEVICE FOR CONTROLLING THE DRAWBAR LOAD FOR MULTI-AXLE TRAILERS
DISPOSITIF POUR LE RÉGLAGE DE LA CHARGE DE LA BARRE D'ATTELAGE POUR DES REMORQUES À PLUSIEURS ESSIEUX

(30) Priorität: 20.02.2013 DE 102013002845
(43) Veröffentlichungstag der Anmeldung: 27.08.2014
(73) Patentinhaber: HYDAC Systems & Services GmbH, 66280 Sulzbach (DE)
(72) Erfinder: Kunz, Jean-Marie, 57410 Rohrbach-Lès-Bitche (FR); Muller, Jonathan, 57720 Breidenbach (FR)
(74) Vertreter: Bartels und Partner, Patentanwälte

(56) Entgegenhaltungen:
- EP-A1- 2 390 121
- EP-A2- 2 275 287
- EP-A2- 2 591 928
- DE-A1- 2 348 089
- DE-A1- 4 402 182
- DE-A1- 19 718 258
- DE-A1- 19 721 130
- DE-A1-102004 003 023
- None

## Beschreibung

Die Erfindung betrifft eine Einrichtung zur Steuerung der Deichsellast bei einem durch ein Schleppfahrzeug mittels einer Deichsel ziehbaren, mehrachsigen Anhänger, bei dem mindestens eine Achse aus einer Funktionsposition anhebbar oder absenkbar ist, mit den Merkmalen im Oberbegriff von Anspruch 1.

Anhänger, die mehrere Achsen als ungelenkte Nachläufer aufweisen, werden mit zwei Achsen als Tandem-Anhänger und mit drei Achsen als Tridem-Anhänger bezeichnet. Wenn solche Anhänger für schwerere Transportlasten und entsprechend hohe Achslasten ausgelegt sind, werden sie häufig in der Bauwirtschaft und insbesondere in der Landwirtschaft eingesetzt. Um einen störungsfreien Betrieb mit optimaler Zugkraft des Schleppfahrzeuges zu ermöglichen, muss sichergestellt sein, dass die vom Anhänger über die Deichsel auf das Zugfahrzeug übertragene Last einerseits ausreichend hoch ist, um durch Belastung der Antriebsachse des Zugfahrzeugs einen geringen Schlupf und dadurch eine optimale Zugkraft zu gewährleisten. Andererseits darf ein Höchstwert nicht überschritten werden, um zu vermeiden, dass durch Lastübertragung auf andere Achsen des Gespanns, also hintere Laufachse oder Laufachsen des Anhängers oder Hinterachse des Zugfahrzeugs, Schäden eintreten oder die Deichsel zerstört wird. Während im leeren Zustand des Anhängers ein optimaler Bereich der Deichsellast vorgebbar ist, der bei landwirtschaftlichen Fahrzeugen beispielsweise zwischen 0,5 t und darüber (je nach Fahrzeugtyp) betragen kann, können sich durch Beladen des Anhängers je nach Ladezustand und Lastverteilung Deichsellasten ergeben, die weit außerhalb des zulässigen Bereichs liegen, der bei Anhängern mit Achslasten von 10 t oder mehr in einem Bereich von 3 t liegt. Um eine solche Bereichsüberschreitung zu verhindern, gibt man dem Fahrer die Möglichkeit, die Position der Vorderachse des Anhängers zu verändern, beispielsweise die an der Deichsel wirksame Last zu erhöhen, indem er die Vorderachse anhebt. Ob ein derartiger Eingriff seitens des Fahrers korrekt erfolgt, hängt von der richtigen Beurteilung des Ladezustandes und der Lastverteilung ab. Angesichts der Schwierigkeit der richtigen Beurteilung sind Fehlleistungen möglich. Daher können auf Deichsel, Zugfahrzeug und/oder Fahrwerk des Anhängers übertragene Lasten unkontrolliert sein und weit über den zulässigen Lastbereichen liegen, wodurch Fahrwerke oder Deichsel zerstört werden können.

Die EP 2 275 287 A2 beschreibt eine gattungsgemäße Einrichtung zur Steuerung der Deichsellast bei einem durch ein Schleppfahrzeug mittels einer Deichsel ziehbaren, mehrachsigen Anhänger, bei dem mindestens eine Achse aus einer Funktionsposition anhebbar oder absenkbar ist, wobei mittels einer Rechnereinheit in Abhängigkeit von der Beladungs- und/oder Fahrsituation des Anhängers eine oder mehrere Achsen des Anhängers derart anhebbar oder absenkbar ist bzw. sind, dass die Deichsellast in vorgebbaren Grenzen konstant bleibt.

Weitere Einrichtungen zur Steuerung von Deichsel lasten gehen aus der DE 44 02 182 A1, der DE 197 18 258 A1, der DE 197 21 130 A1, der DE 23 48 089 A1 und der DE 10 2004 003 023 A1 hervor. DE 10 2004 003023 A1 offenbart ähnlich wie die Erfindung Einzelheiten der eingesetzten Ventilanordnungen bei einer gattungsgemäßen Einrichtung zur Steuerung der Deichsellast bei einem durch ein Schleppfahrzeug mittels einer Deichsel ziehbaren, mehrachsigen Anhänger.

Im Hinblick auf diese Problematik liegt der Erfindung die Aufgabe zugrunde, eine Einrichtung für eine automatisierte Steuerung der Deichsellast in Abhängigkeit von Lastverhältnissen des Anhängers zur Verfügung zu stellen.

Erfindungsgemäß ist diese Aufgabe durch eine Einrichtung gelöst, die die Merkmale des Patentanspruchs 1 in seiner Gesamtheit aufweist.

Gemäß dem kennzeichnenden Teil des Anspruchs 1 sieht die Erfindung diesbezüglich vor, dass für den Anhänger mit einem mittels eines Hydrauliksystems adaptierbaren Fahrwerk die Rechnereinheit (ECU) zumindest mit Hydraulikkomponenten einer Vorderachse wirkungsmäßig koppelbar ist; dass bei dem Anhänger mit einer hydropneumatischen Achsenfederung ein jeweiliger Federungszylinder der Vorderachse mittels der Rechnereinheit zur Einstellung der Deichsellast ansteuerbar ist; dass das Hydrauliksystem des Anhängers eine erste Steuerventileinheit aufweist, mittels deren das Druckniveau eines jeweiligen Federungszylinders der Deichselfederung auf einen einer vorgegebenen Deichselhöhe entsprechenden Wert einstellbar ist; dass das Hydrauliksystem eine zweite Steuerventileinheit aufweist, mittels deren das Druckniveau des jeweiligen Federungszylinders der Vorderachse auf einen einer gewünschten Deichsellast entsprechenden Wert einstellbar ist; dass die Achsenfederung für Federungszylinder in Form von Radzylindern der Achsen Speicher aufweist; dass für die Niveauregulierung des Anhängers das Druckniveau einzelner Speicher über Leitungen getrennt einstellbar ist, indem die Druckversorgung mittels der ersten Steuerventileinheit in Form eines Niveauregelblockes erfolgt; und dass der Niveauregelblock und die zweite Steuerventileinheit in entgegengesetzte Richtungen wirkend an den jeweiligen Federungszylinder der Vorderachse angeschlossen sind.

Damit erfüllen die Federungszylinder der Vorderachse zusätzlich zur Federungsfunktion die Funktion von Hubzylindern für die Höheneinstellung der Vorderachse.

Es ist ferner vorgesehen, dass mittels einer Rechnereinheit in Abhängigkeit von der Beladungs- und/oder Fahrsituation des Anhängers eine oder mehrere Achsen des Anhängers derart abhebbar oder absenkbar ist bzw. sind, dass die Deichsellast in vorgebbaren Grenzen konstant bleibt. Dadurch, dass die Änderungen der Einstellung der Fahrwerkskonfiguration aufgrund einer mittels einer Rechnereinheit erfolgenden Beurteilung der Beladungs- und/oder Fahrsituation erfolgt, sind Fehlleistungen seitens eines Fahrers und daraus resultierende Gefährdungen vermieden.

Insbesondere ist zur Einstellung der Deichsellast die Veränderung der Höhenposition der Vorderachse des Anhängers vorgesehen.

Um der Rechnereinheit die zur Berechnung der betreffenden Steuerfunktionen erforderlichen Informationen zu liefern, kann eine die Deichsellast erkennende Kraftmesseinrichtung vorgesehen sein, die der Rechnereinheit den Istwert der Deichsellast signalisiert.

Bei Anhängern, bei denen als Bestandteil des Hydrauliksystems eine hydropneumatische Deichselfederung vorgesehen ist, kann mit besonderem Vorteil als Kraftmesseinrichtung für die Deichsellast ein den Druck eines zugehörigen Federungszylinders der Deichselfederung erkennender Drucksensor vorgesehen sein.

Alternativ kann in Fällen, in denen keine hydropneumatische Federung der Deichsel vorhanden ist, ein Kraftmessbolzen oder eine andere mechanische Einrichtung als Kraftmesseinrichtung an der Deichsel vorgesehen sein.

Es kann ein Wegmesssystem vorgesehen sein, das signalisiert, ob die Deichselhöhe der Höhe der Kupplung am Zugfahrzeug entspricht.

Vorzugsweise ist die Anordnung so getroffen, dass die zweite Steuerventileinheit Ventile für eine gesonderte Druckversorgung von dem linken und dem rechten Rad der Vorderachse zugeordneten Federungszylindern aufweist. In Verbindung mit einer beim betreffenden Anhänger vorgesehenen Niveauregelung, mittels deren die Position des Anhängers um die Längsachse einstellbar ist, lassen sich so die Hubfunktionen für linkes und rechtes Rad der Vorderachse entsprechend der Niveausituation getrennt ansteuern.

Die Versorgung des Hydrauliksystems des Anhängers kann über flexible Leitungen vom Schleppfahrzeug her erfolgen. Um bei vom Schleppfahrzeug abgekoppeltem Anhänger einen Istwert der Fahrwerkseinstellung des Anhängers beizubehalten, können die entsprechenden Federungszylinder mittels der zugehörigen Ventileinrichtung sperrbar sein. Mittels der der Vorderachse zugeordneten Zylinder kann für Leerfahrten des Anhängers die Vorderachse auch vollständig von der Fahrbahn weg angehoben werden.

Nachstehend ist die Erfindung anhand von in der Zeichnung dargestellten Ausführungsbeispielen im Einzelnen erläutert. Es zeigen:
- Fig. 1: eine schematisch vereinfacht gezeichnete perspektivische Schrägansicht eines Tandem-Anhängers, der mit einem Ausführungsbeispiel der erfindungsgemäßen Steuereinrichtung versehen ist;
- Fig. 2: eine der Fig. 1 ähnliche perspektivische Schrägansicht eines Tridem-Anhängers, der mit einem Ausführungsbeispiel der erfindungsgemäßen Steuereinrichtung versehen ist;
- Fig. 3: eine Symboldarstellung der hydraulischen Schaltung einer hydropneumatischen Deichselfederung und einer Deichsel-Niveauregelung eines mit der erfindungsgemäßen Steuereinrichtung versehenen Anhängers;
- Fig. 4: eine Symboldarstellung der Hydraulikschaltung eines Ausführungsbeispiels der erfindungsgemäßen Steuereinrichtung für einen Tandem-Anhänger; und
- Fig. 5: eine der Fig. 4 entsprechende Darstellung der Hydraulikschaltung eines Ausführungsbeispiels der Erfindung für einen Tridem-Anhänger.

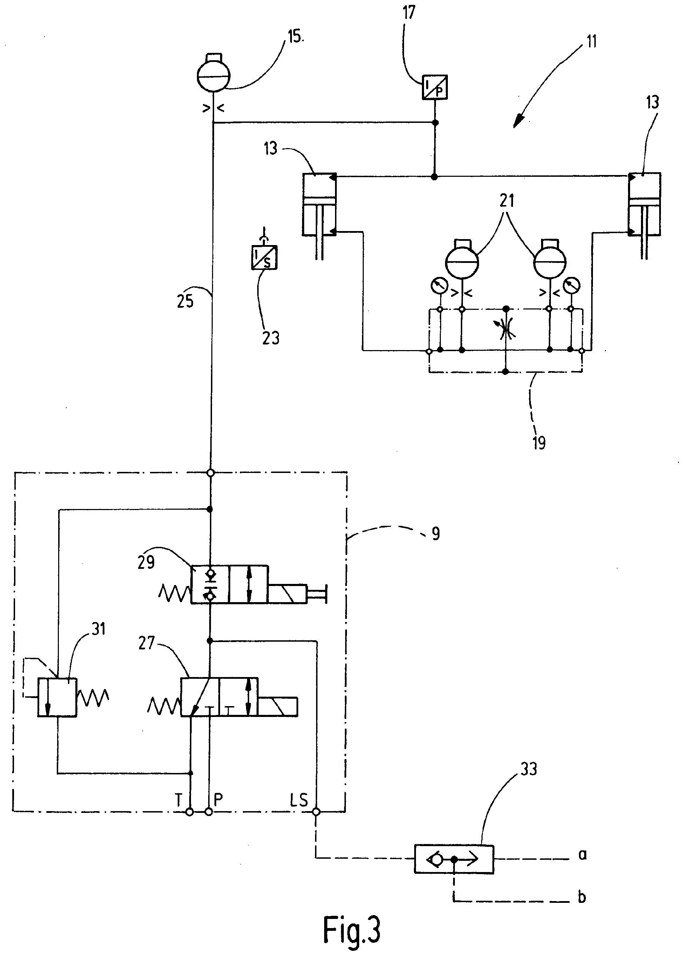

Die Ausführungsform der Fig. 3 dient lediglich der Erläuterung des Hintergrundes der Erfindung und ist nicht Gegenstand eines Anspruches.

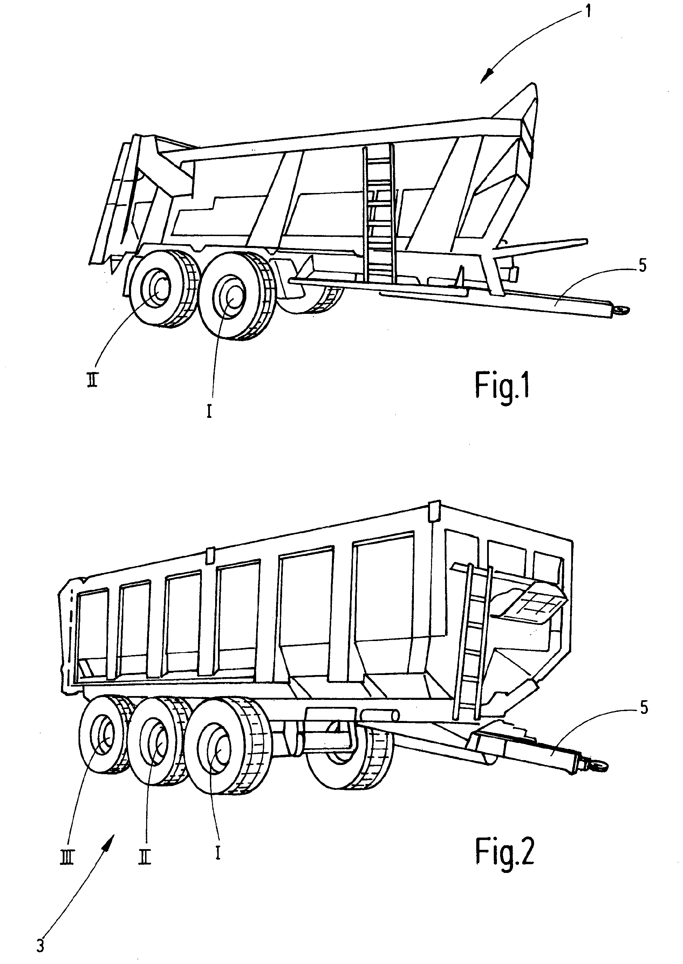

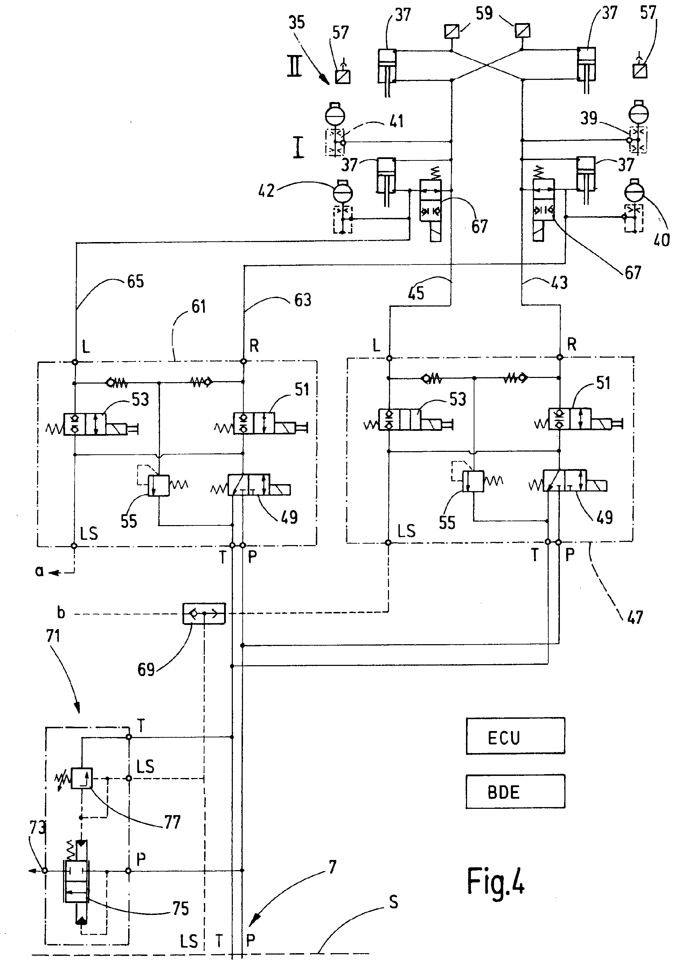

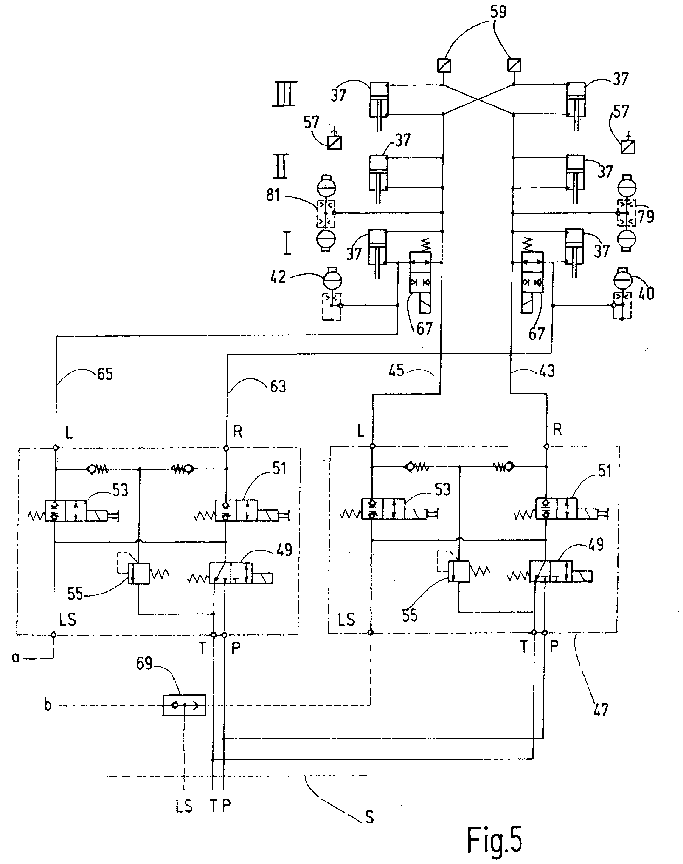

Anhand der Zeichnung ist die Erfindung nachstehend an einem ersten Ausführungsbeispiel, das einen Tandem-Anhänger 1 (Fig. 1) betrifft, sowie an einem zweiten Ausführungsbeispiel erläutert, das einen Tridem-Anhänger 3 (Fig. 2) betrifft. Der Aufbau der Hydraulikschaltung für das erste Ausführungsbeispiel ist in den Fig. 3 und 4 dargestellt, während die Fig. 3 und 5 die Hydraulikschaltung des zweiten Ausführungsbeispiels zeigen.

In den vereinfachten Darstellungen der Fig. 1 und 2 sind die mechanischen Komponenten des jeweils zugehörigen Hydrauliksystems der Anhänger 1, 3 nicht dargestellt. Die Anhänger 1 und 3 weisen jeweils für ihre Deichsel 5, die um eine horizontale, zur Fahrzeuglängsachse senkrechte Achse schwenkbar ist, eine hydropneumatische Deichselfederung (11 in Fig. 3) auf, die, zusätzlich zur Federungsfunktion, eine Höhen- oder Niveaueinstellung der Deichsel 5 um ihre Schwenkachse ermöglicht. Für diese Niveaueinstellung ist ein in Fig. 3 mit 9 bezeichneter Niveauregelblock vorgesehen. Für die Laufachsen, die von vorn nach hinten mit I bis III bezeichnet sind, ist jeweils eine hydropneumatische Achsenfederung (35 in Fig. 4 und 5) vorhanden. Deren jeweiligen mechanischen Komponenten, wie zumindest ein Federungszylinder für jedes Rad, sind nicht dargestellt, da diese Komponenten, wie dies auch bei der Deichselfederung 11 der Fall ist, in an sich bekannter Weise ausgebildet sein können, so dass hierauf nicht mehr einzugehen ist.

Wie erwähnt, zeigen Fig. 3 und 4 die Hydraulikschaltung für den Tandem-Anhänger 1. Die Versorgung der Hydraulikschaltung erfolgt vom Zugfahrzeug her über Verbindungsleitungen 7 mit Druckanschluss P, Tankanschluss T und Anschluss LS (Load-Sensing) einer den Lastdruck meldenden Steuerleitung. In Fig. 3 sind der Niveauregelblock für die Höheneinstellung der Deichsel 5 mit 9 und die Deichselfederung mit 11 bezeichnet. Die Deichselfederung 11 weist in Parallelschaltung zwei Federungszylinder 13 auf, an deren Kolbenseite ein Federspeicher 15 und ein Druckaufnehmer 17 angeschlossen sind. Die Stangenseiten der Federungszylinder 13 sind mit einem Speicherblock 19 in Verbindung, der zwei hydropneumatische Speicher 21 aufweist. Ein die Niveaueinstellung der Deichsel 5 erkennendes Wegmesssystem ist mit 23 bezeichnet. Die Einstellung der Position der Deichsel 5 auf eine für die Kupplung mit dem Zugfahrzeug erforderliche Höhe erfolgt durch Einstellung der Kolbenstellung der Federungszylinder 13 durch eine entsprechende Druckversorgung des Federspeichers 15 über eine Verbindungsleitung 25 vom Niveauregelblock 9 her, wobei ein Wegmesssystem 23 die Kolbenstellung der Federungszylinder 13 und damit die Einstellposition der Deichsel 5 erkennt. Der bei der Einstellposition herrschende Speicherdruck, dessen Höhe der Druckaufnehmer 17 erkennt, kennzeichnet den Istwert der aktuell herrschenden Deichsellast. Die Signale des Druckaufnehmers 17 und des Wegmesssystems 23 werden in einer Rechnereinheit ECU, siehe Fig. 4 und 5, verarbeitet, um Steuersignale für eine Einstellung der Vorderachse I auf Einstellpositionen zu liefern, bei denen die Deichsellast im vorgegebenen Lastbereich liegt. Für die Druckversorgung der Deichselfederung 11 über die Leitung 25 weist der Niveauregelblock ein 3/2-Wegeventil 27 sowie ein 2/2-Wegeventil 29 auf, die von der Rechnereinheit ECU elektrisch steuerbar sind, wobei das 2/2-Wegeventil 29 zudem manuell entsperrbar ist. Die Verbindungsleitung 25 ist über ein Druckbegrenzungsventil zum Tankanschluss T hin abgesichert. Die Fig. 3 zeigt den Schaltzustand, bei dem der Druckanschluss P am Wegeventil 27 und die Leitung 25 am Wegeventil 29 jeweils gesperrt sind. Ohne elektrische Betätigung, also bei Ruhezeiten des Systems, kann die Leitung 25 und damit die Deichselfederung 11 durch mechanische Betätigung des Wegeventils 29 zum Tankanschluss T hin drucklos gemacht werden. Durch elektrische Ansteuerung der Wegeventile 27, 29 ist die Leitung 25 der Deichselfederung 11 mit dem Druckanschluss P verbindbar. Über ein Wechselventil 33 ist der Anschluss LS an Verbindungsstellen a und b mit dem übrigen Teil der Hydraulikschaltung in Verbindung, die in Fig. 4 für Tandem-Anhänger 1 oder in Fig. 5 für Tridem-Anhänger 3 dargestellt ist.

In Fig. 4 ist die Achsenfederung mit 35 bezeichnet. Diese weist für die Radzylinder 37 beider Achsen I und II Speicher 39 bis 42 auf, wobei die Speicher 39 und 40 der rechten Fahrwerksseite R und die Speicher 41 und 42 der linken Fahrwerksseite L zugeordnet sind. Für die Niveauregelung des Anhängers 1, d.h. die Positionseinstellung um die Fahrzeuglängsachse, ist das Druckniveau der Speicher 39, 40 bzw. 41, 42 über Leitungen 43 und 45 getrennt einstellbar, indem die Druckversorgung mittels eines Niveauregelblocks 47 erfolgt. Hierfür sind die Leitungen 43 und 45 mit dem Druckanschluss P mittels elektrisch betätigbarer, von der Rechnereinheit ECU ansteuerbarer Wegeventile verbindbar, nämlich einem 3/2-Wegeventil 49 und zwei 2/2-Wegeventilen 51 und 53, wobei die Wegeventile 51, 53 auch manuell entsperrbar sind, um bei Ruhezeiten des Systems die Achsenfederung 35 zum Tankanschluss T hin drucklos machen zu können. Über ein Druckbegrenzungsventil 55 sind die Leitungen 43, 45 zum Tankanschluss T hin abgesichert. Ein Wegmesssystem 57 signalisiert der Rechnereinheit ECU die Kolbenstellungen der Radzylinder 37, und Druckaufnehmer 59 signalisieren den Istwert des Federungsdruckes für die rechte Fahrwerksseite R und die linke Fahrwerksseite L.

Um die Höhenposition der Vorderachse I nach Maßgabe der Steuersignale der Rechnereinheit ECU einzustellen, weist die Hydraulikschaltung einen Liftblock 61 auf. In Aufbau und Funktion entspricht dieser dem Niveauregelblock 47, so dass die Komponenten mit gleichen Bezugszahlen bezeichnet sind. Mittels des Liftblocks 61 sind die Radzylinder 37 der Vorderachse I für die rechte Fahrwerksseite R über eine Leitung 63 und für die linke Fahrwerksseite L über eine Leitung 65 mit dem Druckanschluss P verbindbar. Durch Sperren von zwei 2/2-Wegeventilen 67 an der Vorderachse I sind dadurch die Stangenseiten der Radzylinder 37 der Vorderachse I gesondert mit dem Druckanschluss P verbindbar, um die Position der Vorderachse I derart einzustellen, beispielsweise anzuheben, dass bei der jeweiligen Belastungs- und Fahrsituation ein Istwert der Deichsellast entsteht, der im vorgegebenen Lastbereich liegt.

Für eine zusätzliche, von der Rechnereinheit ECU unabhängige Einstellung der Vorderachse I kann eine vom Fahrer des Gespanns betätigbare Bedieneinheit BDE vorgesehen sein, die es beispielsweise bei einer Leerfahrt ermöglicht, die Vorderachse I vollständig von der Fahrbahn abzuheben. Die Anschlüsse LS am Niveauregelblock 9 der Deichsel 5 und am Liftblock 61 sind über das Wechselventil 33 und ein Wechselventil 69 mit dem Anschluss LS der Verbindungsleitungen 7 an der mit S bezeichneten Schnittstelle mit dem Zugfahrzeug in Verbindung. Der Anschluss LS am Niveauregelblock 47 der Achsenfederung 35 ist über das Wechselventil 69 ebenfalls an den Verbindungsleitungen 7 angeschlossen, so dass über die Schnittstelle S dem Druckversorgungssystem des Zugfahrzeugs der aktuelle Lastdruck signalisiert wird.

Für eine Druckversorgung eines anderen, am Anhänger 1 befindlichen Verbrauchers, etwa eines Betätigers für eine bewegliche Bordwand oder dergleichen, ist bei dem Beispiel von Fig. 4 eine Versorgungseinheit 71 mit einem Ausgang 73 vorgesehen. Die Einheit 71 weist eine Druckwaage 75 mit einem einstellbaren Druckregelventil 77 auf.

Das in Fig. 5 gezeigte, zweite Ausführungsbeispiel unterscheidet sich, wenn man davon absieht, dass keine Versorgungseinheit 71 für zusätzliche Verbraucher vorgesehen ist, vom ersten Beispiel lediglich insofern, als ein Tridem-Anhänger 3 mit drei Achsen I, II und III vorgesehen ist. Zusätzlich zu den Speichern 40 und 42 für die rechte Fahrwerksseite R und die linke Fahrwerksseite L der Achse I sind ein zusätzlicher Speicherblock 79 für die rechte Fahrwerksseite R und ein Speicherblock 81 für die linke Fahrwerksseite L jeweils für die Radzylinder 37 der Achse II und der hintersten Achse III vorgesehen. Im Übrigen entspricht die Funktionsweise derjenigen des ersten Ausführungsbeispiels. In Entsprechung hierzu könnte auch beim zweiten Ausführungsbeispiel eine Versorgungseinheit 71 für zusätzliche Verbraucher vorgesehen sein.

## Patentansprüche

1. Einrichtung zur Steuerung der Deichsellast bei einem durch ein Schleppfahrzeug mittels einer Deichsel ziehbaren, mehrachsigen Anhänger (1; 3), bei dem mindestens eine Achse (I) aus einer Funktionsposition anhebbar oder absenkbar ist, wobei mittels einer Rechnereinheit (ECU) in Abhängigkeit von der Beladungs- und/oder Fahrsituation des Anhängers (1; 3) eine oder mehrere Achsen (I, II) des Anhängers (1; 3) derart anhebbar oder absenkbar ist bzw. sind, dass die Deichsellast in vorgebbaren Grenzen konstant bleibt, **dadurch gekennzeichnet,**
- **dass** für den Anhänger (1; 3) mit einem mittels eines Hydrauliksystems adaptierbaren Fahrwerk die Rechnereinheit (ECU) zumindest mit Hydraulikkomponenten (37, 39, 67) einer Vorderachse (I) wirkungsmäßig koppelbar ist;
- **dass** bei dem Anhänger (1; 3) mit einer hydropneumatischen Achsenfederung (35) ein jeweiliger Federungszylinder (37) der Vorderachse (I) mittels der Rechnereinheit (ECU) zur Einstellung der Deichsellast ansteuerbar ist;
- **dass** das Hydrauliksystem des Anhängers (1; 3) eine erste Steuerventileinheit aufweist, mittels deren das Druckniveau eines jeweiligen Federungszylinders der Deichselfederung auf einen einer vorgegebenen Deichselhöhe entsprechenden Wert einstellbar ist;
- **dass** das Hydrauliksystem eine zweite Steuerventileinheit (61) aufweist, mittels deren das Druckniveau des jeweiligen Federungszylinders (37) der Vorderachse (I) auf einen einer gewünschten Deichsellast entsprechenden Wert einstellbar ist;
- **dass** die Achsenfederung (35) für Federungszylinder in Form von Radzylindern (37) der Achsen (I, II) Speicher (39, 40, 41, 42) aufweist;
- **dass** für die Niveauregulierung des Anhängers (1; 3) das Druckniveau einzelner Speicher (39, 40, 41, 42) über Leitungen (43, 45) getrennt einstellbar ist, indem die Druckversorgung mittels der ersten Steuerventileinheit in Form eines Niveauregelblockes (47) erfolgt; und
- **dass** der Niveauregelblock (47) und die zweite Steuerventileinheit (61) in entgegengesetzte Richtungen wirkend an den jeweiligen Federungszylinder (37) der Vorderachse (I) angeschlossen sind.

2. Einrichtung nach Anspruch 1, **dadurch gekennzeichnet, dass** zur Einstellung der Deichsellast die Höhenposition der Vorderachse (I) des Anhängers (1; 3) veränderbar ist.

3. Einrichtung nach Anspruch 3 oder 4, **dadurch gekennzeichnet, dass** eine die Deichsellast erkennende Kraftmesseinrichtung (17) vorgesehen ist, die der Rechnereinheit (ECU) den Istwert der Deichsellast signalisiert.

4. Einrichtung nach Anspruch 5, **dadurch gekennzeichnet, dass** als Bestandteil des Hydrauliksystems des Anhängers (1; 3) eine hydropneumatische Deichselfederung (11) vorgesehen ist und dass als Kraftmesseinrichtung ein den Druck eines zugehörigen Federungszylinders (37) erkennender Drucksensor (59) vorgesehen ist.

5. Einrichtung nach einem der vorstehenden Ansprüche, **dadurch gekennzeichnet, dass** die zweite Steuerventileinheit (61) Ventile (51, 53) für eine gesonderte Druckversorgung von dem linken und dem rechten Rad der Vorderachse (I) zugeordneten Federungszylindern (37) aufweist.

6. Einrichtung nach einem der vorstehenden Ansprüche, **dadurch gekennzeichnet, dass** das Hydrauliksystem des Anhängers (1; 3) über flexible Leitungen (7) vom Schleppfahrzeug (5) her versorgbar ist.

## Claims

1. Device for controlling the drawbar load in a multi-axle trailer (1; 3) which can be drawn by a towing vehicle by means of a drawbar, said trailer having at least one axle (I) which can be raised or lowered from a functional position, wherein one or a plurality of axles (I, II) of the trailer (1; 3) can be raised or lowered by means of a computer unit (ECU) as a function of the loading and/or driving situation of the trailer (1; 3) in such a manner that the drawbar load remains constant within predefinable limits, **characterised in that,**
- for the trailer (1; 3) with a chassis which can be adapted by means of a hydraulic system, the computer unit (ECU) can be operatively coupled at least to hydraulic components (37, 39, 67) of a front axle (I);
- **in that**, in the trailer (1; 3) with hydro-pneumatic axle suspension (35), a respective suspension cylinder (37) of the front axle (I) can be controlled by means of the computer unit (ECU) for adjusting the drawbar load;
- **in that** the hydraulic system of the trailer (1; 3) has a first control valve unit by means of which the pressure level of a respective suspension cylinder of the drawbar suspension can be set to a value corresponding to a predetermined drawbar height;
- **in that** the hydraulic system has a second control valve unit (61) by means of which the pressure level of the respective suspension cylinder (37) of the front axle (I) can be set to a value corresponding to a desired drawbar load;
- **in that** the axle suspension (35) has accumulators (39, 40, 41, 42) for suspension cylinders in the form of wheel cylinders (37) of the axles (I, II);
- **in that**, for level control of the trailer (1; 3), the pressure level of individual accumulators (39, 40, 41, 42) can be adjusted separately via lines (43, 45) **in that** the pressure is supplied by means of the first control valve unit in the form of a level control block (47); and
- **in that** the level control block (47) and the second control valve unit (61), acting in opposite directions, are connected to the respective suspension cylinder (37) of the front axle (I).

2. Device according to claim 1, **characterised in that** the height position of the front axle (I) of the trailer (1; 3) can be changed for adjusting the drawbar load.

3. Device according to claim 3 or 4, **characterised in that** a force measuring device (17) is provided which detects the drawbar load and signals the actual value of the drawbar load to the computer unit (ECU).

4. Device according to claim 5, **characterised in that** a hydro-pneumatic drawbar suspension (11) is provided as part of the hydraulic system of the trailer (1; 3) and **in that** a pressure sensor (59) which detects the pressure of an associated suspension cylinder (37) is provided as the force measuring device.

5. Device according to one of the preceding claims, **characterised in that** the second control valve unit (61) has valves (51, 53) for supplying pressure separately to the suspension cylinders (37) associated with the left and right wheels of the front axle (I).

6. Device according to one of the preceding claims, **characterised in that** the hydraulic system of the trailer (1; 3) can be supplied from the towing vehicle (5) via flexible lines (7).

## Revendications

1. Dispositif de commande de la charge de la barre d'attelage pour une remorque (1 ; 3) à plusieurs essieux pouvant être tirés par un véhicule remorqueur au moyen d'une barre d'attelage, dans lequel au moins un essieu (I) peut être soulevé ou abaissé d'une position fonctionnelle, dans lequel au moyen d'une unité (ECU) informatique en fonction de la situation de charge et/ou de marche de la remorque (1 ; 3) un ou plusieurs essieux (I, II) de la remorque (1 ; 3) peut ou peuvent être soulevés ou abaissés de manière à ce que la charge de la barre d'attelage reste constante dans des limites pouvant être données à l'avance, **caractérisé,**
- **en ce que** pour la remorque (1 ; 3) par un châssis pouvant être adapté au moyen d'un système hydraulique, l'unité (ECU) informatique peut être couplée en action au moins à des composants (37, 39, 67) hydrauliques d'un essieu (I) avant ;
- **en ce que** pour la remorque (1 ; 3) par une suspension (35) hydropneumatique d'essieu, un cylindre (37) respectif de suspension de l'essieu (I) avant peut être commandé au moyen de l'unité (ECU) informatique pour le réglage de la charge de la barre d'attelage ;
- **en ce que** le système hydraulique de la remorque (1 ; 3) a une première unité de soupape de commande, au moyen de laquelle le niveau de pression d'un cylindre respectif de la suspension de la barre d'attelage peut être réglé à une valeur correspondant à une hauteur donnée à l'avance de la barre d'attelage ;
- **en ce que** le système hydraulique a une deuxième unité (61) de soupape de commande, au moyen de laquelle le niveau de pression du cylindre (37) respectif de suspension de l'essieu (I) avant peut être réglé à une valeur correspondante à la charge souhaitée de la barre d'attelage ;
- **en ce que** la suspension (35) d'essieu pour cylindre de suspension sous la forme de cylindres (37) de roue des essieux (I, II) a des accumulateurs (39, 40, 41, 42) ;
- **en ce que**, pour la régulation de niveau de la remorque (1 ; 3), le niveau de pression des divers accumulateurs (39, 40, 41, 42) peut être réglé séparément par des conduits (43, 45) par le fait que l'alimentation en pression s'effectue au moyen de la première unité de soupape de commande sous la forme d'un bloc (47) de réglage de niveau ; et
- **en ce que** le bloc (47) de réglage de niveau et la deuxième unité (61) de soupape de commande sont raccordés en travaillant dans des sens opposés au cylindre (37) respectif de suspension de l'essieu (I) avant.

2. Dispositif suivant la revendication 1, **caractérisé en ce que** pour régler la charge de la barre d'attelage, la position en hauteur de l'essieu (I) avant de la remorque (1 ; 3) peut être modifiée.

3. Dispositif suivant la revendication 3 ou 4, **caractérisé en ce qu'**il est prévu un dynamomètre (17), qui détecte la charge de la barre d'attelage et qui signale à l'unité (ECU) informatique la valeur réelle de la charge de la barre d'attelage.

4. Dispositif suivant la revendication 5, **caractérisé en ce qu'**il est prévu comme partie constitutive du système hydraulique de la remorque (1 ; 3) une suspension (11) pneumatique de la barre d'attelage et **en ce qu'**il est prévu comme dynamomètre un capteur (59) de pression détectant la pression d'un cylindre (37) de suspension associée.

5. Dispositif suivant l'une des revendications précédentes, **caractérisé en ce que** la deuxième unité (61) de soupape de commande a des soupapes (51, 53) pour une alimentation en pression séparée du cylindre (37) de suspension associée à la roue gauche et à la roue droite.

6. Dispositif suivant l'une des revendications précédentes, **caractérisé en ce que** le système hydraulique de la remorque (1 ; 3) peut être alimenté à partir du véhicule (5) remorquant par des conduits (7) souples.
